# EUROPEAN PATENT APPLICATION

(11) **EP 0 666 031 A2**
(43) Date of publication of application: **09.08.1995**
(21) Application number: 95200234.3
(22) Date of filing: 31.01.1995
(51) Int. Cl.: A23C 9/123, A23L 1/03, A23L 1/19, A21D 13/00, A23D 9/007

(54) **Cream based on anhydrous fat containing vaible lactobacillus**

(30) Priority: 02.02.1994 IT MI940186
(71) Applicant: BARILLA G. e R. F.lli - Società per Azioni, I-43100 Parma (IT)
(72) Inventor: Lauro, Antonio, I-43023 Monticelli Terme - Pavia (IT)
(74) Representative: Perani, Aurelio

(57) **Abstract**

The present invention concerns a cream for industrial confectionery based on anhydrous food fats containing viable lactobacilli and having a Aw value of 0.30-0.50. This cream couples the nutritional properties of fresh yoghurt with the organoleptic properties of a confectionery product and can be stored at room temperature for a period of not less than 3 months.

## Description

In general the present invention relates to a cream for industrial confectionery and, more specifically, to a cream containing viable lactobacilli, which can be used as such in industrial confectionery and particularly as a filling for bakery products.

By the expression "viable lactobacilli" microorganisms which are commonly used in the fermentation of milk to produce yoghurt are meant; the term "lactobacilli" includes, i.a. the following microorganisms: Lactobacillus acidophylus, Streptococcus thermophylus and Lactobacillus bulgaricus.

Bakery products having a filling with a yoghurt taste are known and present in the market; such a taste is, however, obtained by means of fermented milk lacking in viable lactobacilli.

Since the high nutritional contribution supplied by yoghurt is instead unanimously recognized in the dietetic field, right because it contains viable lactobacilli, there exist quite a strong need of providing industrial confectionery products endowed with the same nutritional characteristics of yoghurt, in that containing the same viable lactobacilli.

The problem underlying the present invention is that of providing a cream containing the viable lactobacilli typical of fresh yoghurt, in a comparable concentration, and in which the viability of said lactobacilli for a long time at room temperature is ensured.

This problem is solved, according to the invention, by a cream based on anhydrous food fats, characterized in that it contains viable freeze-dried lactobacilli at a concentration ranging from 0.01% to 0.50% by weight of the total weight of the cream, and in that it has a Aw value in the range 0.30-0.50.

According to a preferred embodiment of the invention, the cream contains 5-15% w/w powdered yoghurt.

Preferably, the Aw value is 0.30-0.35.

The viable freeze-dried lactobacilli contained in the cream are preferably of the genus Lactobacillus acidophylus, Streptococcus thermophylus and Lactobacillus bulgaricus.

Preparations of viable freeze-dried lactobacilli containing a number of lactobacilli per gram ranging from 1_{·}10⁷ to 1·10¹¹ are preferably utilized.

At the Aw values defined above, the lactobacilli contained in the cream are mantained in a condition of latent life for a time period of at least three months at room temperature, without the addition of any preserving or stabilizing agents, such as, for instance, polyols, like sorbitol, mannitol and the like.

When the cream or the bakery product containing the cream is eaten, the lactobacilli recover their original viability thanks to the hydration caused by the saliva or by the juices of the digestive system.

An example of preparation of a cream containing viable lactobacilli according to the invention, in which all parts are meant to be parts by weight, is provided hereinbelow.

### EXAMPLE

49.4 parts of anhydrous vegetable fats, 20 parts of sucrose, 25 parts of powdered skim milk, 5 parts powdered yoghurt and 0.5 part flavours were mixed together. Mixing was carried on for 6 minutes in order to ensure that the components be distributed in the most homogeneous manner within the whole mass. At the end, 0.1 parts of viable freeze-dried lactobacilli having a titre of 1·10⁹ lactobacilli per gram were added and gently mixed.

The cream thus prepared had a Aw value of 0.36 and the number of viable lactobacilli per gram of cream was 1·10⁶.

Sandwich-like cookies were filled with this cream, packed by a paper/alluminum/polyethylene film and subjected to a conservation test at room temperature (25°C) for 4 months. After such a period of time had elapsed, the viability of lactobacilli contained in the cream was evaluated, by determining the concentration of the survived lactobacilli. This concentration resulted to be almost unchanged with respect to the initial concentration and more precisely as high as 8·10⁵ lactobacilli per gram of cream. This concentration of viable lactobacilli is fully comparable with the concentrations occurring in the commercial fresh yoghurts.

Creams whose composition included the following ingredients (the values represent parts by weight of the total weight of the cream), when submitted to conservation tests, gave analogous results:

| | |
|---|---|
| annydrous vegetable fats | 45-65 |
| mono- and disaccarides | 20-40 |
| powdered milk | 5-25 |
| powdered yoghurt | 5-15 |
| flavours | 0.1-0.5 |
| viable freeze-dried lactobacilli | 0.01-0.5 |

The viability of the lactobacilli contained in creams having the above reported composition remained in all cases practically unchanged with respect to the initial viability over a three months period.

The cream according to the invention has the advantage of coupling the nutritional properties of yoghurt, including the vitaminic supply granted by the viable lactobacilli, with the pleasant organoleptic properties of the confectionery products.

Furthermore, these organolectic properties can be varied at will through the addition of ingredients such as, for instance, hazelnut paste, chocolate, cocoa, etc.

The creams for industrial confectionery according to the invention can represent, right by virtue of their excellent organoleptic properties, valuable alternatives to yoghurt, as a food source of viable lactobacilli, for people who do not like the marked acidic taste of yoghurt.

The cream of the invention can be used for filling cookies, snacks and bakery product in general, and allows to obtain products having a shelf life of at least 3 months at room temperature.

## Claims

1. Cream for industrial confectionery based on anhydrous food fats characterized in that it contains viable freeze-dried lactobacilli at a concentration ranging from 0.01% to 0.50% by weight of the total weight of the cream and in that it has a Aw value in the range 0.30-0.50.

2. Cream according to claim 1 characterized in that it contains 5-15% w/w powdered yoghurt.

3. Cream according to any of claims 1 and 2, characterized in that the viable freeze-dried lactobacilli are selected from the group comprising Lactobacillus acidophylus, Streptococcus thermophylus and Lactobacillus bulgaricus.

4. Cream according to any of claims 1 to 3, characterized in that the Aw value is within the range of 0.30 to 0.35.

5. Cream according to any of claims 1 to 4, characterized in that it comprises the following ingredients in parts by weight of the total weight of the cream:
| | |
|---|---|
| anhydrous vegetable fats | 45-65 |
| mono- and disaccarides | 20-40 |
| powdered milk | 5-25 |
| powdered yoghurt | 5-15 |
| flavours | 0.1-0.5 |
| viable freeze-dried lactobacilli | 0.01-0.5 |

6. Bakery product of industrial confectionery comprising a cream filling, characterized in that said filling is a cream according to any of claims 1 to 4.

7. Bakery product of industrial confectionery comprising a cream filling, characterized in that said filling consists of the cream according to claim 5.
